# EUROPEAN PATENT SPECIFICATION

(11) **EP 2 320 497 B1**
(45) Date of publication and mention of the grant of the patent: **11.07.2012**
(21) Application number: 10189635.5
(22) Date of filing: 02.11.2010
(51) Int. Cl.: H01M 2/34, H01M 10/44, H01M 10/48, H01M 2/32

(54) **Abnormality determination system for secondary battery**
Anormalitätsbestimmungssystem für Sekundärbatterie
Système de détection d'anomalies pour batterie secondaire

(30) Priority: 04.11.2009 JP 2009252647
(43) Date of publication of application: 11.05.2011
(73) Proprietor: MITSUBISHI HEAVY INDUSTRIES, LTD., Tokyo (JP)
(72) Inventor: Matsumura, Hitoshi, Tokyo (JP)
(74) Representative: HOFFMANN EITLE

(56) References cited:
- JP-A- 2008 186 591
- JP-A- 2009 076 270

## Description

### BACKGROUND OF THE INVENTION

### Field of the Invention

The present invention generally relates to an abnormality determination system that determines an abnormality in a secondary battery.

### Description of the Related Art

To make a secondary battery such as a secondary lithium battery lighter, aluminum is used for a battery case for the secondary battery. A battery case that is made of a metal is called a battery can. If an aluminum-based material reacts with lithium ion (Li ion), then electrical chemical reaction may occur at the battery can depending on electric field distribution that is influenced by discharge and charge of laminated body of electrode inside the battery. In this case, if Li ion deposits on the inside wall of in the battery can, then the deposit is changed to an alloy of LiAl, which may cause breakage of the battery can while decreasing the strength thereof or erosion progression of the battery can. To avoid the reaction, of alloying by the aluminum material in the battery case, a method of coating the inside of the battery case with insulator can be considered. However, even if the inside of the battery case is coated with insulator, defective part such as lack of uniformity of coating and pin hole of coating may appear at the part of the coating, and nonaqueous electrolyte including Li ion may contact to the inside of the battery case. Japanese Unexamined Patent Application, First Publication, No. 2008-186591 discloses a method of connecting a positive terminal of the battery to the battery case through current restriction means such as a resistive element so as to prevent the electrical chemical reaction with Li ion in the battery case.

In the method of Japanese Unexamined Patent Application, First Publication, No. 2008-186591, the battery case is battery can and the positive terminal is connected to the battery case through the current restriction means. Therefore, in the usual state (in the normal state), the potential of the battery case is equal to the potential of the positive terminal of the battery, and deposition of Li inside of the battery case, which may contact to the electrolyte, can be prevented. The alloying to LiAl, which is caused by Li ion in the electrolyte and the battery case made of aluminum material, is progressed electrochemically under the reductive atmosphere in which the potential of the battery case is equal to the potential of the negative terminal of the battery. As a result, the alloying of the battery case can be prevented by keeping the potential of the battery case in a range where the alloying to LiAl from Li ion can be prevented. To determine whether or not the potential of the battery case is kept in the range, in the method of Japanese Unexamined Patent Application, First Publication, No. 2008-186591, the potential of the battery case is measured by a battery case potential measurement means. Although the positive terminal and the battery can are connected through a current limiting means, if the potential of the battery can is not kept in the prescribed range where the alloying can be prevented, decrease of the impedance between the inside of the battery can and the electrode or decrease of the amount of the electrolyte may occur. Therefore, it is significant to monitor the state of the secondary battery by measuring the potential of the battery can.

But in the method of measuring the potential of the battery case by using the battery case potential measurement means described above, whether the battery is normal or abnormal is determined based on whether or not the potential of the battery case is in a range where the alloying can be prevented. If the potential is in the range, then it is determined that the battery is normal. If the potential is not in then range, then it is determined that the battery is abnormal Therefore, even if the battery is abnormal, when the potential is in the range where the alloying can be prevented it is determined that the battery is normal, and the abnormality of the battery cannot be detected early.

### SUMMERY

An abnormality determination system may include a secondary battery that includes a battery case including a positive terminal and a negative terminal, a switch unit that connects electrically the positive terminal to the battery case based on a first control signal, the switch unit breaking electrically a connection between the positive terminal and the battery case based on a second control signal, a voltage measurement unit that measures a voltage of the battery case, and a determination unit that performs a determination of an abnormality in the secondary battery based on the voltage that is measured by the voltage measurement unit If voltage drop per unit of time of the voltage, which is measured by the voltage measurement unit, is greater than or equal to a prescribed threshold value after the second control signal is output to the switch unit at a prescribed timing, then the determination unit determines that the secondary battery is abnormal and the determination unit outputs the first control signal to the switch unit after the determination by the determination unit.

The abnormality determination system may further include a display unit that displays that the secondary battery is abnormal when receiving an abnormal signal. When the determination unit determines that the secondary battery is abnormal, the determination unit may output the abnormal signal to the display unit.

The abnormality determination system may further include a trigger apparatus that outputs a trigger signal When the determination unit receives the trigger signal, the determination unit may output the second control signal to the switch unit without relation to the prescribed timing, and then when drop of the voltage, which is measured by the voltage measurement unit, per unit of time is greater than or equal to the prescribed threshold value, the determination unit may determine that the secondary battery is abnormal and then the determination unit may output the first control signal to the switch unit.

The abnormality determination system may be a moving vehicle that includes an electric power load that is driven by receiving an electric power from the secondary battery.

### BRIEF DESCRIPTION OF THE DRAWINGS

The above features and advantages of the present invention will be more apparent from the following description of certain preferred embodiments taken in conjunction with the accompanying drawings, in which:
FiG 1 is a schematic external view illustrating a secondary lithium battery in accordance with a first preferred embodiment of the present invention;
FIG. 2 is a schematic view illustrating an internal configuration of the secondary lithium battery in accordance with the first preferred embodiment of the present invention;
FIG. 3 is a schematic circuit diagram of an abnormality determination system in accordance with the first preferred embodiment of the present invention;
FIG. 4 is a view illustrating an example of a potential of a battery case when a battery is normal and when the battery is abnormal in accordance with the present invention;
FIG. 5 is a schematic circuit diagram of an abnormality determination system in accordance with the second preferred embodiment of the present invention;
FIG 6 is a schematic circuit diagram of an abnormality determination system in accordance with the third preferred embodiment of the present invention; and
FIG. 7 is a view illustrating m example of a usage of the abnormality determination system in accordance with the present invention.

### DETAILED DESCRIPTION OF THE PREFERRED EMBODIMENTS

The present invention supplies an abnormality determination system that can detect the abnormality of the secondary battery easily at an arbitrary timing based on the potential of the battery case for the secondary battery,

The invention will be now described herein with reference to illustrative embodiments. Those skilled in the art will recognize that many alternative embodiments can be accomplishes using the teaching of the present invention and that the invention is not limited to the embodiments illustrated for explanatory purpose.

### First Preferred Embodiment

The abnormality determination system in accordance with a first preferred embodiment of the present invention will be described.

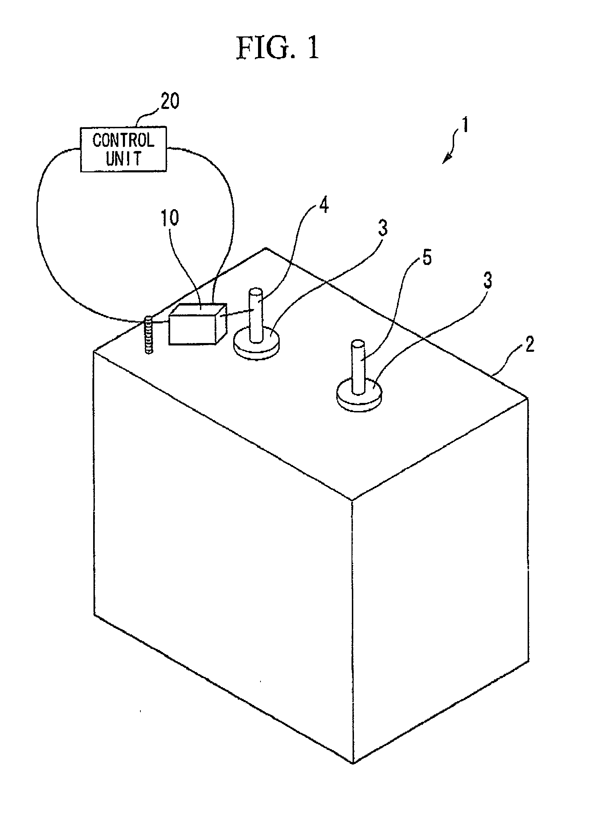

FIG. 1 is a schematic external view illustrating a secondary lithium battery in accordance with a first preferred embodiment of the present invention.

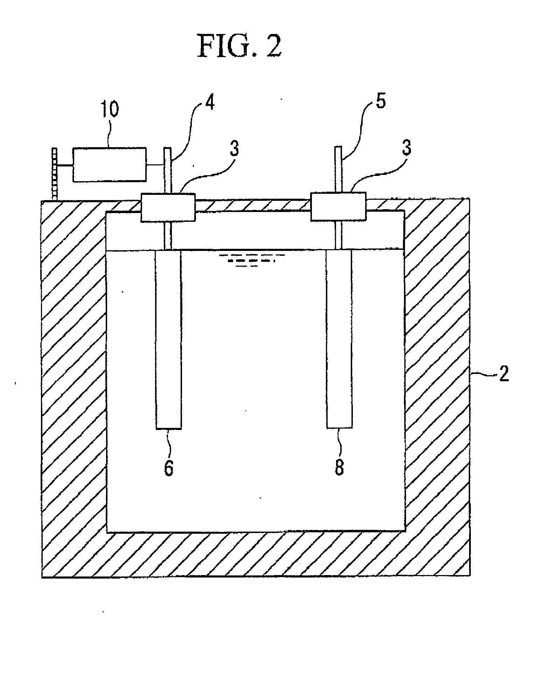

FIG. 2 is a schematic view illustrating an internal configuration of the secondary lithium battery in accordance with the first preferred embodiment of the present invention.

As in FIG. 1 and FIG. 2, the secondary lithium battery 1 includes a battery case 2, an insulator 3, a positive terminal 4, a negative terminal 5, a positive collector 6, a negative collector 8, a same potential keeping unit 10, and a control unit 20.

As illustrated in FIG. 1 and FIG. 2, the secondary lithium battery 1 in accordance with the first preferred embodiment of the present invention includes the battery case 2 that is made of aluminum material. The aluminium material is A3000 series (A3003, A3004), A1500 series, or A5000 series, for example. The positive terminal 4 and the negative terminal 5 are attached to the battery case 2 with the insulator 3 holding between them, The positive collector 6 (positive electrode) is connected to the positive terminal 4. Lithium manganate (LiMn₂O₄), which can store and emit Li ions, is applied on the surface of the positive collector 6 as a positive electrode active substance. The positive collector 6 is disposed inside the battery case 2. The negative collector 8 (negative electrode) is connected to the negative terminal 5. The negative collector 8 is made of carbon or manganese. The negative collector 8 is disposed inside the battery case 2. The nonaqueous electrolyte including Li ions is filled in the battery case 2.

The inside of the battery case 2 may touch the nonaqueous electrolyte directly. The inside of the battery case 2 may be covered with an insulator such as modified polyolefin. In the latter case, the alloying to LiAl by Li ion, which is emitted to the nonaqueous electrolyte in the battery case 2, and the battery case 2, which is made of aluminum material, can be prevented primarily.

The structure and material of the secondary lithium battery described above are examples. Various known structures and materials can be applied to the present invention.

The configuration of the secondary lithium battery 1 was described above. In the secondary lithium battery 1, the positive terminal 4 and the battery case 2 are connected electrically through the same potential keeping unit 10. The same potential keeping unit 10 includes a resistive element and a switch circuit such as a relay. The resistive element and the switch circuit are connected in series. For example, one end of the resistive element is connected electrically to the positive terminal 4, and one end of the switch circuit is connected electrically to the battery case 2. If the switch circuit is open, then the electrical connection between the positive terminal 4 and the battery case 2 is closed. If the switch circuit is closed, then the positive terminal 4 and the battery case 2 are connected electrically.

In normal state, the switch circuit is closed. When the secondary lithium battery 1 is embedded in the battery system of the moving vehicle such as an electric car, a hybrid car, a train, etc. or in the battery system for stationary use such as in-house use, it must be prevented to make a current pathway by connecting the battery case 2 to ground. Therefore, the battery case 2 is set in a case made of an insulator such as plastic, or the outside of the battery case 2 is covered with such an insulator. Accordingly, if the switch circuit is closed, then it is possible to keep the potential of the positive terminal 4 and the potential of the battery case 2 the same.

As a result, the potential of the battery case 2 can be kept in the range of potential where alloying to LiAl by Li ion can be prevented. Therefore, even if defective part may appear on the covered surface of the inside of the battery case 2 and the nonaqueous electrolyte including Li ion contacts to the inside of the battery case 2, the alloying to LiAl by Li ion at the area where the nonaqueous electrolyte contacts to the inside of the battery case 2 can be suppressed. Then, a change of properties in the battery case 2 and a decrease in performance of the battery can be prevented.

Here, the potential of which the alloying to LiAl by Li ion can be prevented is such that the potential of the battery case to the negative terminal 5 is between 0.3 V and 0.5 V, for example.

In the first preferred embodiment of the present invention, an abnormality determination system 100 includes the same potential keeping unit 10 and a control unit 20.

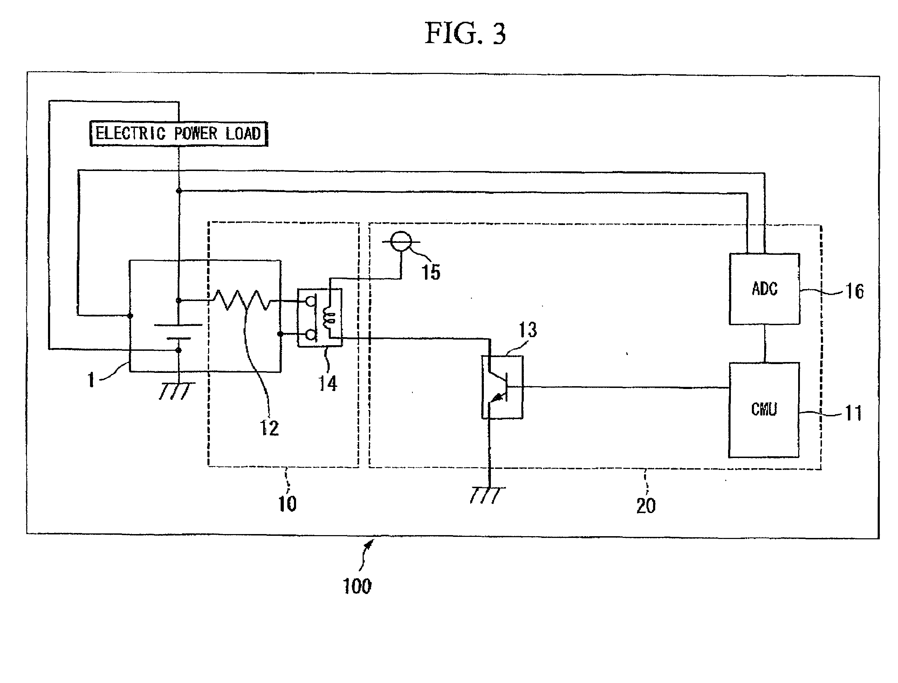

FIG. 3 is a schematic circuit diagram of the abnormality determination system in accordance with the first preferred embodiment of the present invention. The abnormality determination system is the battery system described above. When driving the battery system for a moving vehicle such as an electric car or the battery system for a stationary system, the abnormality determination of the embedded secondary battery is performed in the battery system. The secondary lithium battery 1 supplies electric power to electric power loads, which is not illustrated, such as electric power motors.

The moving vehicles are, for example, industrial vehicles such as forklifts electric cars, or hybrid cars, which wheels are connected to the electric power loads, and airplanes or ships which propellers or screws are connected to the electric power loads. The stationary system is, for example, an electric power supply system for in-house use that supplies electric power to the electric power loads for in-house use such as electric appliances.

As illustrated in FIG. 3, the abnormality determination system 100 includes the same potential keeping unit 10 and a control unit 20.

The control unit 20 includes a CMU (Cell Monitor Unit) 11 which may be used for a voltage measurement unit or an abnormality determination unit, a transistor 13, an electric power source 15, and an ADC (Analog Digital Converter) 16. The CMU 11 monitors and controls the abnormality of the battery. The transistor 13 is a switch circuit that performs an ON/OFF operation, by which a conduction path is formed between ground and one end of a coil of a relay 14, which is a switch circuit, based on a control by the CMU. The electric power source 15 is connected to the other end of the coil of the relay 14. The ADC 16 is connected to the positive terminal 4 and the battery case 2, and receives the potential of the positive terminal 4 and the potential of the battery case 2 as analog signals. Then the ADC 16 converts the analog signals to digital signals and outputs the digital signals to CMU 11.

The control unit 20 includes a load control apparatus, which is not illustrated, a display unit and a BMU. The load control apparatus performs a control of the electric power load such as a control of the rotation speed of the electric motor. The BMU performs a central control of information of a plurality of CMU if there are multiple CMUs.

The same potential keeping unit 10 includes a resistive element 12 which may be used for a current limit unit and the relay 14 which may be used for a breaking unit. The resistive element 12 electrically connects the positive terminal 4 of the secondary lithium battery 1 and the battery case 2 through the relay 14. The relay 14 makes its node point open and close based on whether the transistor is on or off. By the above configuration the abnormality determination system 100 perform the operation of determining the abnormality of the secondary lithium battery 1.

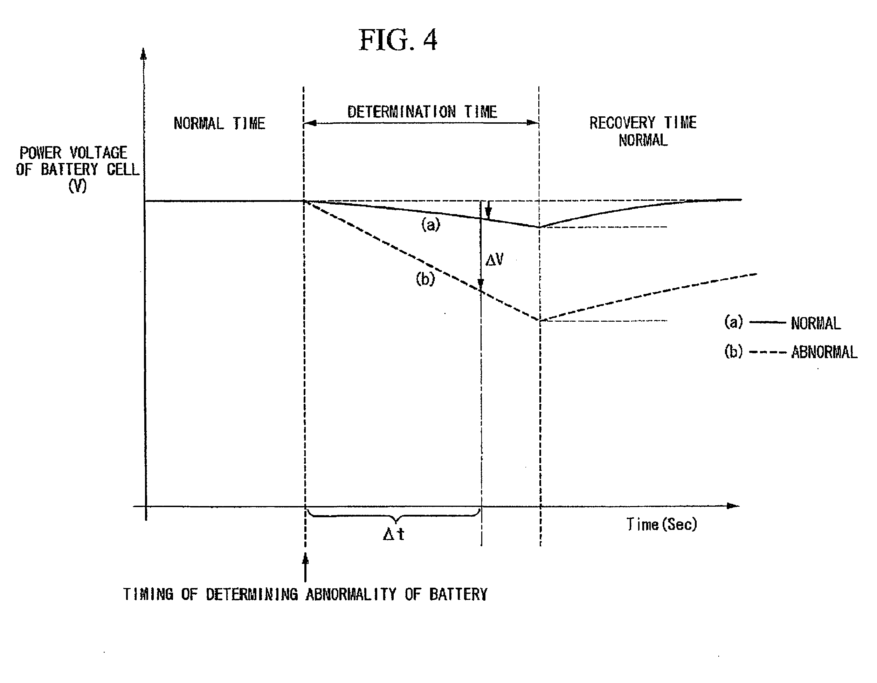

FIG. 4 is a view illustrating an example of a potential of a battery case when a battery is normal and when the battery is abnormal in accordance with the present invention.

The CMU 11 receives the voltage of the battery case 1 from the ADC 16 and monitors the voltage of the battery case 1 after the electric path between the positive terminal 4 and the battery case 2 is disconnected. If a voltage drop ΔV that is equal to or more than the threshold value per unit of time Δt, which is the voltage drop of 1 V per 1 second for example, occurs as illustrated in (b) of FIG. 4, then the CMU 11 determines that the secondary lithium battery is abnormal. The threshold value is predetermined based on how the secondary battery is designed to be used. The threshold value is stored in a nonvolatile memory in the CMU 11 beforehand to be shipped from factory, for example.

At the time of determination, the relay 14 is made open, which is controlled by the CMU 11, so that the electric path between the positive terminal 4 and the battery case 2 is closed and charge accumulated in the battery case 2 is decreased by, for example, self-discharge. The self-discharge, is a a phenomenon in which stored charge of the battery is reduced without any connections between the battery case and the electrode or chemical reactions in the battery. Then, a voltage drop of a certain level occurs so that the voltage of the battery case becomes less than the threshold value per unit of time Δt as illustrated in (a) of FIG. 4. The CMU 11 determines that this state is normal.

However, if an abnormality in the battery occurs such as erosion, a leakage of liquid, or an internal short-circuit, then a voltage drop occurs that is more than the threshold value per unit of time Δt. The CMU 11 detects this voltage drop and determines that the secondary lithium battery 1 is abnormal.

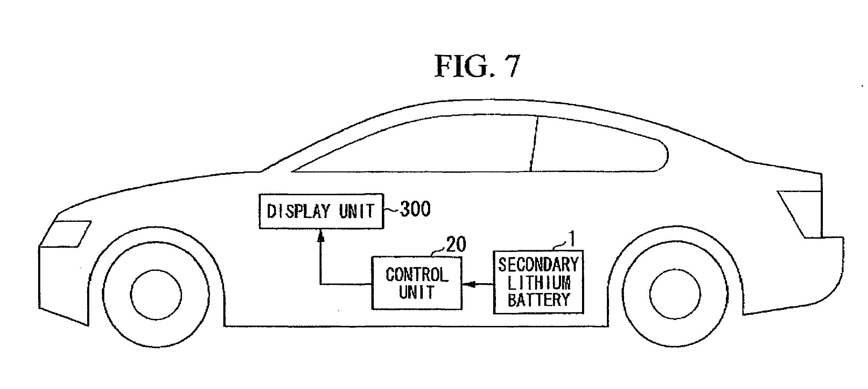

Here, the disconnection of the relay 14 may be performed at a constant frequency such as once every other day. The user of the battery system such as the driver of the electric car may activate a trigger. FIG. 7 shows the case of the electric car. At a determination timing of the abnormality of the battery, which may be predetermined beforehand or may be determined by receiving a prescribed instruction from the user of the system such as the driver of the electric car, the CMU 11 turns the transistor 13 ON, by which the relay 14 is changed from close to open.

The operation of the CMU 11 changing the transistor 13 from close to open at the predetermined timing will be described, First, a BMU (Battery Management Unit), which is not illustrated in the figure, outputs a detection signal to the CMU at the predetermined timing, which is the factory default setting, for example, based on a timer, which is not illustrated in the figure. The CMU 11 receives the detection signal and changes the state of the relay 14, which is a switch circuit, to open and outputs a control signal (a second control signal) to the transistor 13, which is also a switch circuit. Then current flows between ground and the electric power source 15, by which the electric path between the positive terminal 4 and the battery case 2 is disconnected. Here, the transistor 13 is an NPN type so that the control signal applies positive potential to the emitter. The transistor 13 may not be bipolar, but may be a CMOS transistor. The CMOS transistor is preferable when used as a control switch, because the CMOS transistor has less current loss.

When the user of the system activates a trigger, the user makes a declaration of its intention to activate a trigger by pushing a switch of a controller, which is not illustrated in the figure, of the system, for example. Then a trigger signal is output from the controller to the BMU and the BMU receives the trigger signal and outputs the detection signal to the CMU 11 without relation to the above prescribed timing. As a result, the relay 14 is changed open and the electric path between the positive terminal 4 and the battery case 2 is disconnected.

The monitoring of the voltage of the battery case and the determination of the abnormality of the battery by the CMU 11 after the electric path between the positive terminal 4 and the battery case 2 is disconnected was described above.

As another example, the disconnection of the relay 14 may be performed by using an acceleration sensor, which is not illustrated in the figure, which is equipped in a navigation, system of the electric car. If an acceleration that is more than the prescribed value is detected by the acceleration sensor, then the trigger signal is output from the controller of the system equipped in the electric car to the BMU. Then the BMU receives the trigger signal and outputs the detection signal to the CMU 11 without relation to the above prescribed timing. In this case, the defective part may occur inside the battery case. Therefore, the prescribed value of the acceleration is, for example, an acceleration value when the electric car touches an obstacle.

The result of the determination by the CMU 11, which determines whether the battery is normal or abnormal, is transmitted from the CMU 11 to the BMU as a digital signal. After outputting the result of the determination, the CMU 11 outputs a control signal (a first control signal), which turns the relay 14 close so as to disconnect the current between the ground and the electric power source 15, to the transistor 13 that is a switch circuit. Then, the disconnection between the positive terminal 4 and the battery case 2 is changed to the state of being connected again, If the battery case is a battery can, then an alloying can be prevented by making the potential of the battery case and the potential of the positive terminal or the positive electrode the same, which is caused by the electric path described above. As a result, battery life of the battery is extended. Accordingly, except when performing the determination, the electric path is controlled so as not to be closed.

If the determination of the abnormality in the battery is performed at the predetermined timing, then the BMU, which receives the result of the determination, outputs an abnormal signal when the battery is abnormal. Then the display unit 300 of the battery system receives the abnormal signal, and informs the user that the battery is abnormal, by emitting light or sound. If the determination of the abnormality in the battery is performed at the predetermined timing, then the user cannot recognize that the determination of the abnormality in the battery is performed by the system. Therefore, it is not necessary to inform the user that the battery is normal when the battery is normal. Accordingly, if the battery is normal, then the BMU is not necessary to output a normal signal, which represents that the battery is normal to the display unit.

On the other hand, when the user activates a trigger, the user may want to know whether the battery is normal or abnormal. Therefore, the BMU, which receives the result of the determination, outputs the normal signal when the battery is normal and the abnormal signal when the battery is abnormal. The display unit 300 receives the normal signal or the abnormal signal and makes the user recognize whether the battery is normal or abnormal by emitting light or sound.

Here, the CMU 11 receives both the potential of the positive terminal 4 and the potential of the battery case 2 from the ADC 16. This is because the CMU 1 monitors these two potentials regardless of the determination of the abnormality. If these two potentials are different, then it means that the state is abnormal and the battery is broken, for example, there exists a current path in the battery case 2.

As described above, at the prescribed timing or the trigger by the user, the CMU 11 control the disconnection of the electric path between the positive terminal 4 and the battery case 2. However if these two potentials are compared just before the operation of the disconnection and there is a potential difference more than a range that can be allowed, then the CMU 11 may output the digital signal, which is the result of the determination of the abnormality, to BMU without performing the control of the disconnection. Then, the result of the determination is abnormal, so the BMU necessarily outputs the abnormal signal to the display unit 30 and makes the user recognize that the battery is abnormal.

By operating the abnormality determination system in accordance with the first preferred embodiment of the present invention described above, at an arbitrary timing, the abnormality in the secondary lithium battery can be determined easily, and user can recognize the determination. As a result, the abnormality in the battery can be found early, and the stability is increased.

### Second Preferred Embodiment

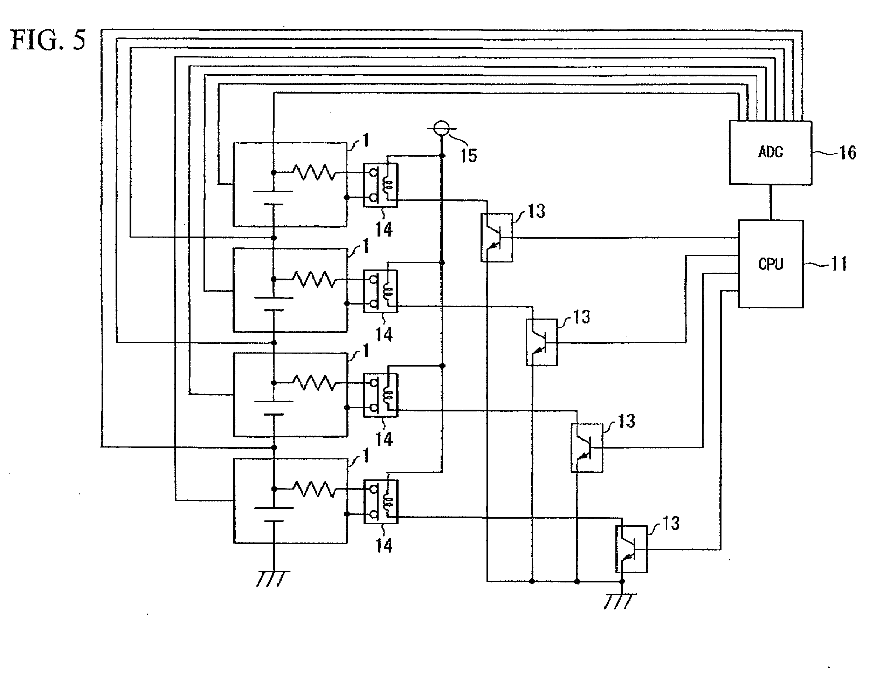

FIG. 5 is a schematic circuit diagram of an abnormality determination system in accordance with the second preferred embodiment of the present invention.

In this embodiment, a plurality of secondary lithium batteries are connected in series, and configure assembled battery. The abnormality determination system 100 performs each determination of abnormality in each secondary lithium battery 1. In FIG. 5, the assembled battery is composed of four batteries 1 that are connected in series.

The relays 14 and the transistors 13 corresponding to each of the batteries 1 are disposed. The CMU 11 controls four transistors 13. The ADC 16 receives the potential of the positive terminal of each of the batteries 1 and the potential of each of the battery cases to output to the CMU 11. Other operations of the determination of the abnormality in each of the batteries 1 is the same as described in the first preferred embodiments.

### Third Preferred Embodiment

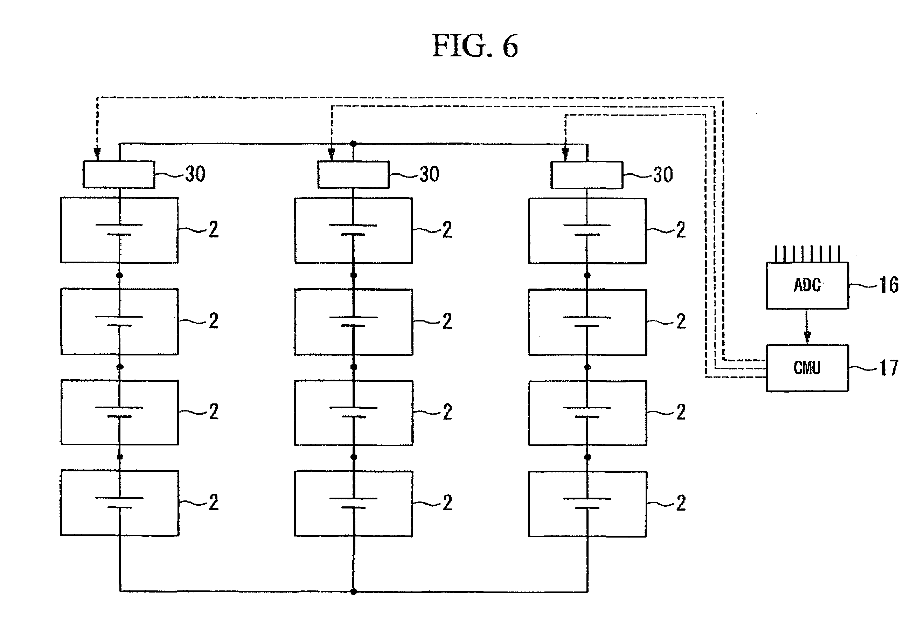

FIG. 6 is a schematic circuit diagram of an abnormality determination system in accordance with the third preferred embodiment of the present invention.

In FIG. 6, a plurality of assembled batteries, each of which is composed of a plurality of batteries connected in series, are connected in parallel. Here, the number of the batteries is four. A release unit 30 is disposed on each end of each assembled battery. Though not illustrated in the figure, the relays 14 and the transistors 13 are disposed corresponding to each battery. The CMUs are disposed corresponding to each assembled battery. Here, three CMUs are disposed because there are three assembled batteries. The CMUs perform the monitoring and control of the four battery cell that is connected to the respective CMU, The determination of the abnormality in the battery, which is performed by each CMU, is controlled in the same way as in the second preferred embodiment.

The release unit 30 performs a process of releasing electrically the assembled battery, which is monitored by the CMU and outputs the abnormal signal, by changing the relay open or close, which is controlled by the BMU that receives the abnormal signal from one of the CMUs.

By the control described above, even if the abnormality in the battery in the electric car occurs, the car can move at slow speeds to avoid such consequence that the car cannot move.

In the above description of the preferred embodiments, the abnormality determination system 100 performs the disconnection between the positive terminal 4 and the battery case 2 by using the transistor 13 and the relay 14. However, the invention is not limited to the above operation, and any disconnection means can be used that can perform the disconnection that is controlled by the CMU 11 and BMU.

## Claims

1. An abnormality determination system comprising:
a secondary battery that includes a battery case including a positive terminal and a negative terminal;
a switch unit that connects electrically the positive terminal to the battery case based on a first control signal, the switch unit breaking electrically a connection between the positive terminal and the battery case based on a second control signal;
a voltage measurement unit that measures a voltage of the battery case; and
a determination unit that performs a determination of an abnormality in the secondary battery based on the voltage that is measured by the voltage measurement unit, and
wherein if voltage drop per unit of time of the voltage, which is measured by the voltage measurement unit, is greater than or equal to a prescribed threshold value after the second control signal is output to the switch unit at a prescribed timing, then the determination unit determines that the secondary battery is abnormal and the determination unit outputs the first control signal to the switch unit after the determination by the determination unit.

2. The abnormality determination system according to claim 1, further comprising:
a display unit that displays that the secondary battery is abnormal when receiving an abnormal signal, and
wherein when the determination unit determines that the secondary battery is abnormal, the determination unit outputs the abnormal signal to the display unit.

3. The abnormality determination system according to claim 2, further comprising:
a trigger apparatus that outputs a trigger signal, and
wherein when the determination unit receives the trigger signal, the determination unit outputs the second control signal to the switch unit without relation to the prescribed timing, and then when drop of the voltage, which is measured by the voltage measurement unit, per unit of time is greater than or equal to the prescribed threshold value, the determination unit determines that the secondary battery is abnormal and then the determination unit outputs the first control signal to the switch unit.

4. The abnormality determination system according to claim 3, wherein the abnormality determination system is a moving vehicle that includes an electric power load that is driven by receiving an electric power from the secondary battery.

## Patentansprüche

1. Abnormalitätsbestimmungssystem umfassend:
eine Sekundärbatterie, die ein Batteriegehäuse umfasst, umfassend einen positiven Anschluss und einen negativen Anschluss;
eine Schaltungseinheit, die elektrisch den positiven Anschluss mit dem Batteriegehäuse verbindet, basierend auf einem ersten Steuerungssignal, wobei die Schaltungseinheit eine Verbindung zwischen dem positiven Anschluss und dem Batteriegehäuse elektrisch unterbricht, basierend auf einem zweiten Steuerungssignal;
eine Spannungsmesseinheit, die eine Spannung des Batteriegehäuses misst; und
eine Bestimmungseinheit, die eine Bestimmung einer Abnormalität in der Sekundärbatterie durchführt, basierend auf der Spannung, die von der Spannungsmesseinheit gemessen wird, und
wobei, falls ein Spannungsabfall pro Zeiteinheit der Spannung, die von der Spannungsmesseinheit gemessen wird, größer oder gleich einem vorgeschriebenen Schwellenwert ist, nachdem das zweite Steuerungssignal an die Schaltungseinheit ausgegeben wurde, zu einer vorgeschriebenen Zeit, dann bestimmt die Bestimmungseinheit, dass die Sekundärbatterie abnormal ist und die Bestimmungseinheit gibt das erste Steuerungssignal an die Schaltungseinheit aus, nach der Bestimmung durch die Bestimmungseinheit.

2. Abnormalitätsbestimmungssystem nach Anspruch 1, ferner umfassend:
eine Anzeigeeinheit, die anzeigt, dass die Sekundärbatterie abnormal ist, wenn ein Abnormalitätssignal empfangen wird, und
wobei, wenn die Bestimmungseinheit bestimmt, dass die Sekundärbatterie abnormal ist, die Bestimmungseinheit das Abnormalsignal an die Anzeigeeinheit ausgibt.

3. Abnormalitätsbestimmungssystem nach Anspruch 2, ferner umfassend:
ein Triggergerät, das ein Triggersignal ausgibt, und
wobei, wenn die Bestimmungseinheit das Triggersignal empfängt, die Bestimmungseinheit das zweite Steuerungssignal an die Schaltungseinheit ausgibt, ohne Bezug auf die vorgeschriebene Zeit, und wenn der Spannungsabfall, welcher von der Spannungsmesseinheit gemessen wird, pro Zeiteinheit größer oder gleich dem vorgeschriebenen Schwellenwert ist, die Bestimmungseinheit bestimmt, dass die Sekundärbatterie abnormal ist und dann die Bestimmungseinheit das erste Steuerungssignal an die Schaltungseinheit ausgibt.

4. Abnormalitätsbestimmungssystem nach Anspruch 3, wobei das Abnormalitätsbestimmungssystem ein sich bewegendes Fahrzeug ist, das eine elektrische Leistungslast umfasst, die getrieben wird durch einen Empfang einer elektrischen Leistung von der Sekundärbatterie.

## Revendications

1. Système de détermination d'anomalies comprenant :
une batterie secondaire qui comporte un boîtier de batterie comprenant une borne positive et une borne négative ;
une unité de commutation qui connecte électriquement la borne positive au boîtier de batterie sur la base d'un premier signal de commande, l'unité de commutation coupant électriquement une connexion entre la borne positive et le boîtier de batterie sur la base d'un deuxième signal de commande ;
une unité de mesure de tension qui mesure une tension du boîtier de batterie ; et
une unité de détermination qui détermine une anomalie dans la batterie secondaire sur la base de la tension qui est mesurée par l'unité de mesure de tension ; et
dans lequel si une chute de tension par unité de temps de la tension, qui est mesurée par l'unité de mesure de tension, est supérieure ou égale à une valeur seuil prescrite après que le deuxième signal de commande est délivré en sortie à l'unité de commutation à un moment prescrit, ensuite l'unité de détermination détermine que la batterie secondaire est anormale et l'unité de détermination délivre en sortie le premier signal de commande à l'unité de commutation après la détermination de l'anomalie par l'unité de détermination.

2. Système de détermination d'anomalies selon la revendication 1, comprenant en outre :
une unité d'affichage qui affiche que la batterie secondaire est anormale lorsqu'elle reçoit un signal anormal, et
dans lequel lorsque l'unité de détermination détermine que la batterie secondaire est anormale, l'unité de détermination délivre en sortie le signal anormal à l'unité d'affichage.

3. Système de détermination d'anomalie selon la revendication 2, comprenant en outre :
un appareil de déclenchement qui délivre en sortie un signal de déclenchement, et
dans lequel, lorsque l'unité de détermination reçoit le signal de déclenchement, l'unité de détermination délivre en sortie le deuxième signal de commande à l'unité de commutation, indépendamment du moment prescrit, et ensuite lorsque la chute de la tension, qui est mesurée par l'unité de mesure de tension, par unité de temps est supérieure ou égale à la valeur seuil prescrite, l'unité de détermination détermine que la batterie secondaire est anormale et ensuite l'unité de détermination délivre en sortie le premier signal de commande à l'unité de commutation.

4. Système de détermination d'anomalies selon la revendication 3, dans lequel le système de détermination d'anomalies est un véhicule en mouvement comportant une charge électrique qui est entraînée par la réception de l'énergie électrique à partir de la batterie secondaire.
